# EUROPEAN PATENT APPLICATION

(11) **EP 1 952 780 A1**
(43) Date of publication of application: **06.08.2008**
(21) Application number: 06832510.9
(22) Date of filing: 10.11.2006
(51) Int. Cl.: A61C 8/00

(54) **DENTAL IMPLANT**

(30) Priority: 16.11.2005 JP 2005331492
(71) Applicant: GC Corporation, Tokyo 174-8585 (JP)
(72) Inventor: SAADE, Joseph F., Mekalles Round About 175753 (LB); FARES, Nassib, New Jdeideh 901016 (LB)
(74) Representative: Müller-Boré & Partner Patentanwälte
(86) International application number: PCT/JP2006/322464
(87) International publication number: WO 2007/058125

(57) **Abstract**

A dental implant to be embedded in the jaw bone at a tooth loss site which has a constitution whereby bone resorption with the passage of time after bone attachment can be inhibited. A dental implant (1) having a constitution wherein: a female screw part (1a) is spirally located along the major axis; a male screw part (1b), in which the head size at the complete screw part located in the innermost side in the oral cavity is the maximum head size, is at least provided around the female screw part; a collar part (1c) is provided in the inner side in the oral cavity of the male screw part (1b); the collar part (1c) starts at the part including the base size of the complete screw part of the male screw part (1b) located in the innermost side in the oral cavity and runs while enlarging until an expanded part having a diameter almost the same as the head size of the complete screw of the male screw part (1b) located in the innermost side in the oral cavity, followed by the reduction in size until a part of the inside of the oral cavity having a diameter almost the same as the base size; and the surface of the male screw (1b) and the side face of the collar part (1c) have been surface-roughened.

## Description

The present invention relates to a dental implant to be embedded in a jawbone at a lost tooth part, where bone absorption occurring as time elapses after osseous integration can be restricted, in a dental implant treatment.

In recent years, as one of a dental prosthetic treatment, a dental implant has been used, where a dental implant, which is made of titanium or titanium alloy having excellent bio-compatibility, is embedded in a jawbone at a lost tooth part, and used instead of a natural dental root after direct osseous integration. It is confirmed that the dental implant is used as a crown to a single tooth, as a bridge or a over denture to plural teeth, and works instead of the lost tooth for a long period of time.

In the dental implant treatment, the following dental implant has been widely used (for example, refer to Japanese Patent Application Laid Open No. 2001-321392). It is a dental implant comprising an external thread portion screwed on an outer periphery thereof for keeping a preferable osseous integration state when embedding it in the jawbone, and a collar portion on the intra-oral side of the external thread portion through a cutout portion in a circumferential direction. The cutout portion is provided for determining a screwing depth of the external thread portion. The collar portion has an equal or larger diameter than a largest crest diameter of the external thread portion and is provided for ensuring an initial fixation of the dental implant when embedding it. Further, a smooth surface treated portion is provided on a periphery face on the intra-oral side of the collar portion. When such a dental implant is used, it is reported that gradual absorption of the top of a jawbone i.e. a phenomenon of reducing a bone level by bone absorption occurs due to a partial force acting to the jawbone around the borderline of the dental implant and an abutment mounted on the intra-oral side of the dental implant, when lateral load or the like is applied to the dental implant by the occlusion pressure or the like. Thus, such a bone absorption occurring as time elapses after the osseous integration is a big problem in the dental implant treatment.

As one method for restricting the bone absorption occurring as time elapses after the osseous integration, when the lost tooth is plural, the dental implant are connected each other with a dental prosthesis, like as the bridge or the over denture, to thereby restrict excessive application of an occlusal force to only one dental implant. However, this method largely depends on experience of an operator, and not all operators are skilled in this method.

Further, as another method for restricting the bone absorption, it has been proposed to produce the dental implant to restrict local application of a big force to the jawbone, in such manner that the diameter of the collar portion provided on the intra-oral side of the external thread portion is formed, for example, in a cylindrical shape having a smaller diameter than the largest crest diameter of the external thread portion, to thereby decrease the depth of the cutout portion between the external thread portion and the collar portion. However, there is a problem that the dental implant is hardly fixed at a predetermined position when embedding into the jawbone.

Therefore, in the conventional dental implant, the bone absorption occurring as time elapses after the osseous integration cannot be effectively restricted, even when the lost tooth is single or plural.

A primary objective of the present invention is to solve the above-described problems in the conventional technique, and provide the dental implant capable of effectively restricting the bone absorption occurring as time elapses after the osseous integration, even when the lost tooth is single or plural.

The earnest work was carried out in order to solve the above-mentioned problems and, as a result of this, the following causes for the bone absorption occurring were found to complete the present invention. One cause is that local stress concentration is generated around the borderline between the dental implant and the abutment. Another cause is that, since the dental implant has the cutout portion in the circumferential direction on the intra-oral side of the external thread portion screwed on the outer periphery thereof for determining the screwing depth of the external thread portion, the local force acting to the jawbone is generated at the cutout portion when the lateral load is applied to the dental implant by the occlusion pressure. However, when the cutout portion is not provided on the intra-oral side of the external thread portion, the screwing depth of the external thread portion cannot be determined. So, in order to prevent it, the collar portion, which is provided on the intra-oral side of the external thread portion, is formed to have diameters that expand up from a portion including a root diameter of the complete thread portion of the external thread portion at the most intra-oral side to a bellied portion having an approximately equal diameter to the crest diameter of the complete thread portion of the external thread portion at the most intra-oral side, and thereafter reduce to an intra-oral side portion of the collar portion having an approximately equal diameter to the root diameter. Then, the local force does not act to the collar portion including the borderline with the abutment. Further, surfaces of the external thread portion and side surfaces of the collar portion are subjected to a surface roughening treatment, to thereby promote obtaining of the osseous integration. Then, the stress around the borderline with the abutment can be more distributed.

That is, the present invention is the dental implant, which comprises an internal thread portion screwed along a longitudinal axis, an external thread portion screwed on a side periphery, in which at least a crest diameter of a complete thread portion at the most intra-oral side is a largest crest diameter, and a collar portion provided on the intra-oral side of the external thread portion. In this dental implant, the collar portion is formed to have diameters that expand up from a portion including a root diameter of the complete thread portion of the external thread portion at the most intra-oral side to a bellied portion having an approximately equal diameter to the crest diameter of the complete thread portion of the external thread portion at the most intra-oral side, and thereafter reduce to an intra-oral side portion of the collar portion having an approximately equal diameter to the root diameter. Further, surfaces of the external thread portion and side surfaces of the collar portion are subjected to a surface roughening treatment.

Further, the followings were also found out. In the dental implant, an intra-oral side end portion of the collar portion is formed in a curved surface shape, and the curved surface is subjected to the surface roughening treatment. Then, since the bone covers the portion in the curved surface shape, retaining force of the dental implant in the bone can be increased. Further, the intra-oral side top end surface of the collar portion is perpendicular to the longitudinal axis, and the intra-oral side top end surface is not subjected to the surface roughening treatment. Then, the bone is hardly grown up to the intra-oral side top end surface, and a comparatively stable periodontal tissue can be easily formed with a tooth, gingiva and a dental implant. Furthermore, when the bellied portion of the collar portion is formed in the columnar shape, the growth of bone is not badly influenced since a part having an acute angle is decreased if the collar portion has the same height. So, it is preferable. Further, it is preferable that surfaces subjected to the surface roughening treatment have ten point average roughness (Rz) of 2 to 60µm, or grooves or threads with 0.05 to 0.5 mm depth and width.

Further, the following were also found out. The crest diameters of the complete thread portion of the external thread portion may be equal along the longitudinal axis, or may be reduced or have a reduced diameter part as apart from the intra-oral side. When the external thread portion comprises a multiple-start thread, a pitch of the external thread portion is increased as a result, so that the dental implant can be embedded rapidly in an embedding hole formed in the jawbone. Thus, a patient's burden can be reduced and the dental treatment efficiency of an operator can be increased. Further, an end portion on the opposite side to the intra-oral side comprises a projected hemispherical shaped portion which begins from the root diameter of the complete thread portion of the external thread portion at the end portion on the opposite side to the intra-oral side. Then, it is preferable that the hemispherical shaped portion hardly presses a conical shaped portion formed at a top end portion of the embedding hole and damages the tooth, when the dental implant is embedded in the embedding hole formed in the jawbone of the lost tooth portion. Further, the intra-oral side of the internal thread portion has a recessed portion in a truncated conical shape having diameters which expand up toward the intra-oral side. Then, the abutment fixed on the intra-oral side of the dental implant can be fit certainly and strongly. Furthermore, the intra-oral side of the internal thread portion has a rotation prevention part between the recessed portion in the truncated conical shape and the internal thread portion. Then, the abutment, which is fixed on the intra-oral side of the dental implant, can be certainly positioned and fixed in non-rotational state.

Such a dental implant according to the present invention is same as the conventional dental implant in two points that is that it has the internal thread portion screwed along the longitudinal axis, and that it has the external thread portion screwed on the side periphery thereof, in which the external thread portion at least has the largest crest diameter of the complete thread portion at the most intra-oral side. However, in the present invention, the cutout portion in the circumferential direction for predetermining the screwing depth of the external thread portion is not provided on the intra-oral side of the external thread portion. Further, the collar portion is directly provided on the intra-oral side of the external thread portion, where the collar portion is formed to have diameters that expand up from the portion including the root diameter portion of the complete thread portion of the external thread portion at the most intra-oral side to the bellied portion having the approximately equal diameter to the crest diameter of the complete thread portion of the external thread portion at the most intra-oral side, and thereafter reduce to the intra-oral side portion of the collar portion having the approximately equal diameter to the root diameter. In such a form, the jawbone does not have the portion where the local force is acted to generate the bone absorption when the lateral load is applied to the dental implant by the occlusion pressure. On the other hand, the collar portion has a portion, in which the diameters expand up from the portion including the root diameter portion of the complete thread portion of the external thread portion at the most intra-oral side to the bellied portion having the approximately equal diameter to the crest diameter of the complete thread portion of the external thread portion at the most intra-oral side. Thus the screwing depth of the external thread portion in the embedding hole bored in the jaw bone of the lost tooth portion can be determined. Further, the surfaces of the external thread portion and side surfaces of the collar portion are subjected to the surface roughening treatment, to thereby promote obtaining of the osseous integration. Then, the stress around the borderline with the abutment can be more distributed.

Further, the intra-oral side end portion of the collar portion is formed in the curved surface shape, and the curved surface is subjected to the surface roughening treatment. Then, since the bone covers the portion in the curved surface shape, retaining force of the dental implant in the bone can be increased. Further, the intra-oral side top end surface of the collar portion is perpendicular to the longitudinal axis and not subjected to the surface roughening treatment. Then, the bone is hardly grown up to the intra-oral side top end surface. Further, in a case of producing a dental prosthesis, when an impression is made for obtaining the relative position between the adjacent tooth and the dental implant, the gingiva positioned at the intra-oral side top end surface of the collar portion is only contacted with the intra-oral side top end surface of the collar portion, which is not subjected to the surface roughening treatment. Thus, when the impression material is removed, it is not torn to be broken. Furthermore, the bellied portion of the collar portion is formed in the columnar shape. Then, since the part having the acute angle is decreased if the collar portion has the same height, the bone growth is not badly influenced. Further, it is preferable that surfaces subjected to the surface roughening treatment have ten point average roughness (Rz) of 2 to 60 *µ*m, or grooves or threads with 0.05 to 0.5 mm depth and width.

Furthermore, the crest diameters of the complete thread portion of the external thread portion may be equal along the longitudinal axis, or may be reduced or have a reduced diameter part as apart from the intra-oral side like as the referred Japanese Patent Application Laid Open No. 2001-321392. When the external thread portion comprises a multiple-start thread, a pitch of the external thread portion is increased as a result, so that the dental implant can be embedded rapidly in an embedding hole formed in the jawbone. Thus, a patient's burden can be reduced and the dental treatment efficiency of an operator can be increased. Further, an end portion on the opposite side to the intra-oral side comprises a projected hemispherical shaped portion which begins from the root diameter of the complete thread portion of the external thread portion thereon. Thus, when the dental implant is embedded in the embedding hole formed in the jawbone of the lost tooth portion, the hemispherical shaped portion hardly press a conical shaped portion formed at a top end portion of the embedding hole to damage the bone. Further, when the intra-oral side of the internal thread portion has a recessed portion in a truncated conical shape having diameters which expand up toward the intra-oral side, the abutment fixed on the intra-oral side of the dental implant can be fit certainly and strongly. Furthermore, the intra-oral side of the internal thread portion has a rotation prevention part between the recessed portion in the truncated conical shape and the internal thread portion. Then, when an engaging part for engaging with the rotation prevention part of the dental implant is provided at the abutment to be fixed on the intra-oral side of the dental implant, the abutment can be certainly positioned and fixed in the state where it is not rotated. Thus, the dental prosthesis having high accuracy can be produced.
Figure 1 is a longitudinal sectional explanation view illustrating one example of a dental implant according to the present invention.
Figure 2 is a front view of Figure 1.
Figure 3 is an enlarged explanation view of the A portion of Figure 2.

Hereinafter, the dental implant according to the present invention is described concretely with drawings.

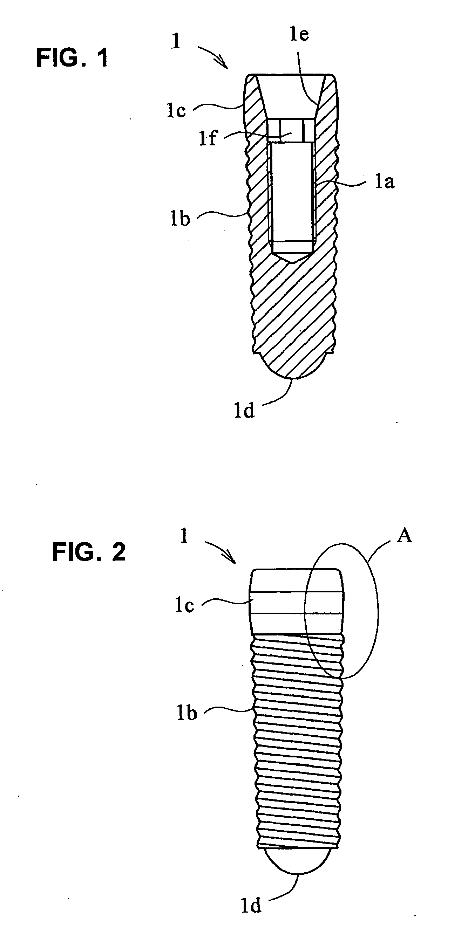

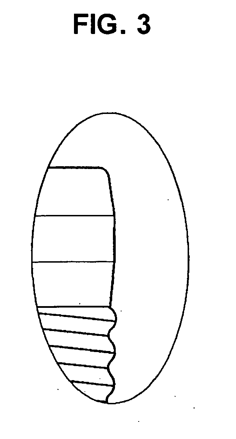

Figure 1 is a longitudinal sectional explanation view illustrating one example of a dental implant according to the present invention. Figure 2 is a front view of Figure 1. Figure 3 is an enlarged explanation view of the A portion of Figure 2.

In the drawings, reference numeral 1 is a dental implant according to the present invention, which is generally made of titanium or titanium alloy. The dental implant 1 comprises an internal thread portion 1a screwed along a longitudinal axis, an external thread portion 1b screwed on a side periphery, in which at least a crest diameter of a complete thread portion at the most intra-oral side is a largest crest diameter, and a collar portion 1c provided on the intra-oral side of the external thread portion 1b and formed to have diameters that expand up from a portion including a root diameter portion of the complete thread portion of the external thread portion 1b at the most intra-oral side to a bellied portion having an approximately equal diameter to the crest diameter of the complete thread portion of the external thread portion at the most intra-oral side, and thereafter reduce to an intra-oral side portion of the collar portion 1c having an approximately equal diameter to the root diameter. Further, surfaces of the external thread portion 1b and side surfaces of the collar portion 1c are subjected to the surface roughening treatment.

As a method of the surface roughening treatment, a sandblast treatment, an acid treatment, a plasma flame spraying treatment, ahydroxyapatite coating treatment or the like can be used. It is preferable that the surface roughening treatment to have ten point average roughness (Rz) of 2 to 60 *µ*m is used, or the surface roughening treatment to have grooves or threads with 0.05 to 0.5 mm depth and width is used. The reason why the ten point average roughness (Rz) is 2 to 60 *µ*m preferably is as follows. If the ten point average roughness (Rz) is less than 2 *µ*m, the roughening degree is small, so that there are few effects to promote obtaining of the osseous integration since the contacting area with the jawbone is not so large. If the ten point average roughness (Rz) is more than 60 *µ*m, the roughening degree is too large, so that it cannot be expected to obtain the osseous integration between the jawbone and the surface roughened part in a short time. Further the reason why the depth and width of the grooves and threads is 0.05 to 0.5 mm preferably when the grooves and threads are formed is as follows. If the depth and width are less than 0.05 mm, the roughening degree is small, so that there are few effects to increasing the contacting area with the jawbone to thereby promote obtaining of the osseous integration. If the depth and width are more than 0.5 mm, the roughening degree is too large, so that the inside of the embedding hole formed in the jawbone must be pre-given the shape being approximately equal to the grooves and threads. Thus, the step on the operation becomes complicated.

As for the external thread portion 1b, the crest diameters of the complete thread portion may be equal along the longitudinal axis, or may be reduced or have a reduced diameter part as apart from the intra-oral side. When the external thread portion 1b has the multiple-start thread, a pitch of the external thread portion 1b is increased as a result, so that the dental implant can be embedded rapidly in the embedding hole formed in the jawbone. Thus, a patient's burden can be reduced and the dental treatment efficiency of an operator can be increased, so that it is preferable.

Further, an intra-oral side end portion of the collar portion 1c is formed in a curved surface shape, and the curved surface is subjected to the surface roughening treatment. Then, since the bone covers the portion in the curved surface shape, retaining force of the dental implant 1 in the bone can be increased. Further, the intra-oral top end surface of the collar portion 1c is perpendicular to the longitudinal axis, and the intra-oral side top end surface is not subjected to the surface roughening treatment. Thus, the bone is hardly grown up to the intra-oral side top end surface of the collar portion 1c, and a comparatively stable periodontal tissue can be easily formed with the tooth, the gingiva and the dental implant 1. At this time, when the intra-oral side top end surface of the collar portion 1c has a smooth surface, the effect is more promoted, so that it is preferable. Further, when the bellied portion of the collar portion 1c is formed in the columnar shape, the part having the acute angle is decreased if the collar portion has the same height, so that the bone growth is not badly influenced. So, it is preferable.

Further, an end portion on the opposite side to the intra-oral side comprises a projected hemispherical shaped portion 1d which begins from the root diameter of the complete thread portion of the external thread portion 1b thereon. Then, when the dental implant 1 is embedded in the embedding hole formed in the jawbone of the lost tooth portion, the hemispherical shaped portion 1d hardly press a conical shaped portion formed at a top end portion of the embedding hole to damage the jawbone. So, it is preferable. At this time, it is preferable that the depth to the conical shaped portion of the top end of the embedding hole is approximately equal to the depth of the hemispherical shaped portion, where the embedding hole is formed in the jawbone of the lost tooth portion before embedding.

Further, when the intra-oral side of the internal thread portion, which is screwed along the longitudinal axis from the intra-oral side of the dental implant 1, has a recessed portion 1e in a truncated conical shape having diameters which expand up toward the intra-oral side, the abutment (it is not illustrated in the drawings) fixed on the intra-oral side of the dental implant 1 can be fit certainly and strongly. Further, the intra-oral side of the internal thread portion 1a has a rotation prevention part 1f between the recessed portion 1e and the internal portion 1a, where the rotation prevention part 1f has a square tubular shape or the like (a hexagonal shape in the illustrated example). Then, when an engaging part having a square pillar shape or the like for engaging with the rotation prevention part 1f is provided at the abutment to be fixed on the intra-oral side of the dental implant, the abutment can be certainly positioned and fixed at the dental implant 1 in the state where it is not rotated. Thus, the dental prosthesis having high accuracy can be produced.

## Claims

1. A dental implant comprising,
an internal thread portion 1a screwed along a longitudinal axis,
an external thread portion 1b screwed on a side periphery, in which at least a crest diameter of a complete thread portion at the most intra-oral side is a largest crest diameter, and
a collar portion 1c provided on the intra-oral side of the external thread portion 1b,
wherein said collar portion 1c is formed to have diameters that expand up from a portion including a root diameter of the complete thread portion of the external thread portion 1b at the most intra-oral side to a bellied portion having an approximately equal diameter to the crest diameter of the complete thread portion of the external thread portion at the most intra-oral side, and thereafter reduce to an intra-oral side portion of the collar portion 1c having an approximately equal diameter to the root diameter, and wherein surface of the external thread portion 1b and side surface of the collar portion 1c are subjected to a surface roughening treatment.

2. The dental implant as claimed in claim 1,
wherein an intra-oral side end portion of the collar portion 1c is formed in a curved surface shape, and the curved surface is also subjected to the surface roughening treatment.

3. The dental implant as claimed in claim 1 or 2,
wherein an intra-oral side top end surface of the collar portion 1c is perpendicular to the longitudinal axis, and the intra-oral side top end surface is not subjected to the surface roughening treatment.

4. The dental implant as claimed in any one of claims 1 to 3,
wherein the bellied portion is formed in a columnar shape.

5. The dental implant as claimed in any one of claims 1 to 4,
wherein the surfaces subjected to the surface roughening treatment have ten point average roughness (Rz) of 2 to 60 *µ*m.

6. The dental implant as claimed in any one of claims 1 to 4,
wherein the surfaces subjected to the surface roughening treatment have grooves or threads with 0.05 to 0.5 mm depth and width.

7. The dental implant as claimed in any one of claims 1 to 6,
wherein the crest diameters of the complete thread portion of the external thread portion 1b are equal along the longitudinal axis.

8. The dental implant as claimed in any one of claims 1 to 6,
wherein the crest diameters of the complete thread portion of the external thread portion 1b are reduced or have a reduced diameter part as apart from the intra-oral side.

9. The dental implant as claimed in any one of claims 1 to 8,
wherein the external thread portion 1b comprises a multiple-start thread.

10. The dental implant as claimed in any one of claims 1 to 9,
wherein an end portion on the opposite side to the intra-oral side comprises a projected hemispherical shaped portion 1d which begins from the root diameter of the complete thread portion of the external thread portion 1b at the end portion on the opposite side to the intra-oral side.

11. The dental implant as claimed in any one of claims 1 to 10,
wherein the intra-oral side of the internal thread portion 1a has a recessed portion 1e in a truncated conical shape having diameters which expand toward the intra-oral side.

12. The dental implant as claimed in claim 11,
wherein the intra-oral side of the internal thread portion 1a has a rotation prevention part If between the recessed portion 1e and the internal thread portion 1a.
